# EUROPEAN PATENT SPECIFICATION

(11) **EP 1 623 895 B1**
(45) Date of publication and mention of the grant of the patent: **19.12.2007**
(21) Application number: 05016912.7
(22) Date of filing: 03.08.2005
(51) Int. Cl.: B60R 25/08

(54) **Anti-theft device for an automobile**
Diebstahlsicherung für ein Fahrzeug
Dispositif antivol pour véhicule

(30) Priority: 03.08.2004 JP 2004226258
(43) Date of publication of application: 08.02.2006
(73) Proprietor: Hitachi, Ltd., Tokyo 100-8280 (JP)
(72) Inventor: Kuramochi, Yuichi c/o Hitachi Ltd. 12th Floor, Chiyoda ku, Tokyo 100-8220 (JP); Manaka, Toshio, Hitachinaka-shi Ibaraki 312-0052 (JP); Nishino, Kimio, Hitachinaka-shi Ibaraki 312-0063 (JP)
(74) Representative: Beetz & Partner

(56) References cited:
- EP-A- 0 526 273
- DE-A1- 3 802 015

## Description

### BACKGROUND OF THE INVENTION

The present invention relates to an anti-theft device for an automobile.

As a conventional anti-theft device for an automobile, there are known a device in which a steering column is mechanically locked, a device in which it becomes impossible to start an engine when the state to be about to start engine by a key other than the regular key is detected, and a device in which the warning is issued, and the operation of the vehicle due to the theft is to be prevented.

A device is known (Japanese Patent Application Laid-Open No. 3-121954) in which the movement of the axle is detected by a sensor provided to the axle, and the brake is applied. A device (Japanese Patent Application Laid-Open No. 63-145154) (Japanese Patent Application Laid-Open No. 63-25157) (Japanese Patent Application Laid-Open No. 55-29689) is known in which a special device is provided between a master cylinder of a hydraulic brake and a wheel cylinder, and the lock operation of wheel is continuously performed when the theft is detected.

Furthermore, there is known a device in which the closed room is provided to the oil pressure caliper, and the brake control oil pressure applied when the vehicle is stopped or parked is held (Japanese Patent Application Laid-Open No. 5-502828).

The structure of an electric parking brake in which the braking force is held without using external energy is also known. (Japanese Patent Application Laid-Open No. 2003-222172).

However, the effect of such a conventional anti-theft device is small effect for the tow-theft which increases in recent years. That is, even if the steering wheel is locked, even if the engine starting is made impossible, or even if the warning is issued, the effect is a very small when the vehicle is towed to repair at another place

With regard to the device which tries to prevent the theft by detecting the movement of the axle to apply the brake as described in Japanese Patent Application Laid-Open No. 3-121954, there is the problem that the theft cannot be prevented when the battery and the braking device are destroyed before the vehicle is stolen.

Japanese Patent Application Laid-Open No. 63-145154 and Japanese Patent Application Laid-Open No. 63-25157 disclose the device which locks the wheel by adding a special device between the master cylinder of the conventional hydraulic brake system and the oil pressure calipers. However, the configuration of the vehicle becomes complex. Moreover, it is necessary to supply continuously or intermittently the energy to lock the wheel when the theft is detected. Therefore, when a long ti me passes from the theft generation, and the remaining amount of the battery, the negative pressure or the oil pressure is not sufficient, uneasiness remains in the reliability of operation of the device.

Absolutely, the brake oil pressure for anti-theft can be easily pulled out when the oil pressure hose connected with the caliper is cut. Therefore, the anti-theft effect is very small.

As to the device which achieves the anti-theft by providing the oil pressure retention mechanism to the oil pressure caliper as described in Japanese Patent Application Laid-Open No. 5-502828, it is necessary to set an anti-theft state by stepping on the brake pedal while the booster is operating in the device. Therefore, there is a defect that the operation at the parking or stopping becomes very complex.

Japanese Patent Application Laid-Open No. 2003-222172 discloses the structure of the electric parking brake. However, it is not effective to the anti-theft as long as it is used as the substitute of the current parking brake.

### BRIEF SUMMARY OF THE INVENTION

In order to solve the above-mentioned problems, the present invention is to provide a braking device, a brake lock system, and an anti-theft device which can mechanically lock all wheels or one wheel or more when the theft is detected.

To solve the above-mentioned problem, the present invention has a theft detection unit which detects the theft based on the detection of at least one of the states of the various doors opening, the vibration of the vehicle body, the unlocking by using something except the regular key, the engine starting in the unlocked state, a braking force generating unit which receives the theft detection signal output from the theft detection unit, and make the lock braking force in each one wheel of back and forth wheels, all wheels or at least one wheel generated, and a braking force holding unit which mechanically holds the braking force.

All wheels or one wheel or more is locked when the theft etc. occur according to the present invention. The tow-theft or the self-running theft of the vehicle can be prevented.

### BRIEF DESCRIPTION OF THE DRAWINGS

FIG. 1 is a block diagram showing the configuration of the embodiment.
FIG. 2 is a block diagram showing the configuration of the embodiment.
FIG. 3 is a chart explaining the operation of the embodiment.
FIG. 4 is a chart explaining the operation of the embodiment.
FIG. 5 is a block diagram showing the configuration of the embodiment.
FIG. 6 is a chart explaining the operation of the embodiment.
FIG. 7 is a block diagram showing the configuration of the embodiment.
FIG. 8 is a block diagram showing a part of the configuration of the embodiment shown in FIG. 2.
FIG. 9 is a chart explaining the operation of the embodiment.
FIG. 10 is a block diagram showing the configuration of the embodiment.
FIG. 11 is a chart explaining the operation of the embodiment.

### DETAILED DESCRIPTION OF THE PRESENT INVENTION

Hereafter, the preferred embodiments of the present invention are explained.

### [Embodiment 1]

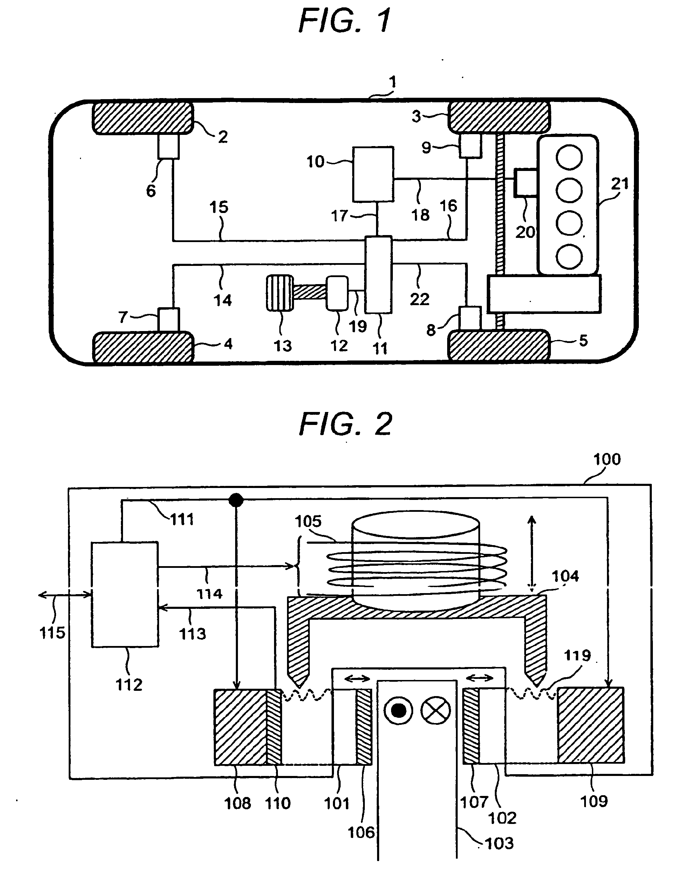

FIG. 1 shows one typical embodiment of the present invention.

In FIG. 1, reference numeral 1 designates a vehicle which contains this embodiment. Numerals 2, 3, 4 and 5 designate a left rear wheel, a near front wheel, a right rear wheel and a off front wheel, respectively. Numerals 6, 7, 8 and 9 each designates a braking force generating unit to put brake on each wheel. The manipulated variable for brake pedal 13 which the driver operates is detected with detection device 12 of the manipulated variable of the brake pedal. This manipulated variable is converted into the electric signal, and transmitted to braking force control device 11 through electric wire 19. Braking force control device 11 transmits the generated braking force to braking force generating unit through braking force transmission part 14, 15, 16, and 22. The braking force transmission parts are composed of electric wires such as a hydraulic oil pipe (line) or a signal conductor.

Braking force generating unit 6, 7, 8, and 9 generate braking force based on the usual brake operation of the driver through a signal when the brake is applied by the driver when running, and the vehicle is made to brake usually.

Reference numeral 100 in FIG. 2 designates the detailed structure of the braking force generating unit shown by 6, 7, 8, or 9 in FIG. 1. Numerals 106 and 107 each designate a friction member of the brake, numerals 101 and 102 each the piston, and numerals 108 and 109 each a braking force generation source composed of a motor, an orthogonal transformation mechanism, etc. Reference numeral 110 designates a braking force sensor to measure the braking force generated by the piston. Numeral 112 is a control unit to monitor braking force signal 113 detected by sensor 110, and to drive and control the braking force source through a drive line 111 by the command thrust received from bus which provides braking force command signal 115 where this bus includes the braking force transmission part shown in FIG. 1. Numeral 103 is a brake rotor, 104 a plunger, and 105 a solenoid. Brake rotor 103 is pressed with friction members 106 and107 by using pistons 101 and 102, and braking force is generated. The power of braking force generation sources 108 and 109 is electric power such as motors like the above-mentioned.

The power is provided to hold the braking force by braking force generation sources 108 and 109 until a certain braking force is obtained. Control unit 112 controls solenoid 105 when the power to hold is detected by sensor 110. As a result, plunger 104 is moved downward in FIG. 2 to engage with the grooves 119 of the pistons 101, 102. It becomes possible to hold the braking force without keeping providing energy by an oil pressure or an electric power to the pistons by such a structure.

The direction where the braking force holding unit moves is not limited to the above example. It depends on the braking device.

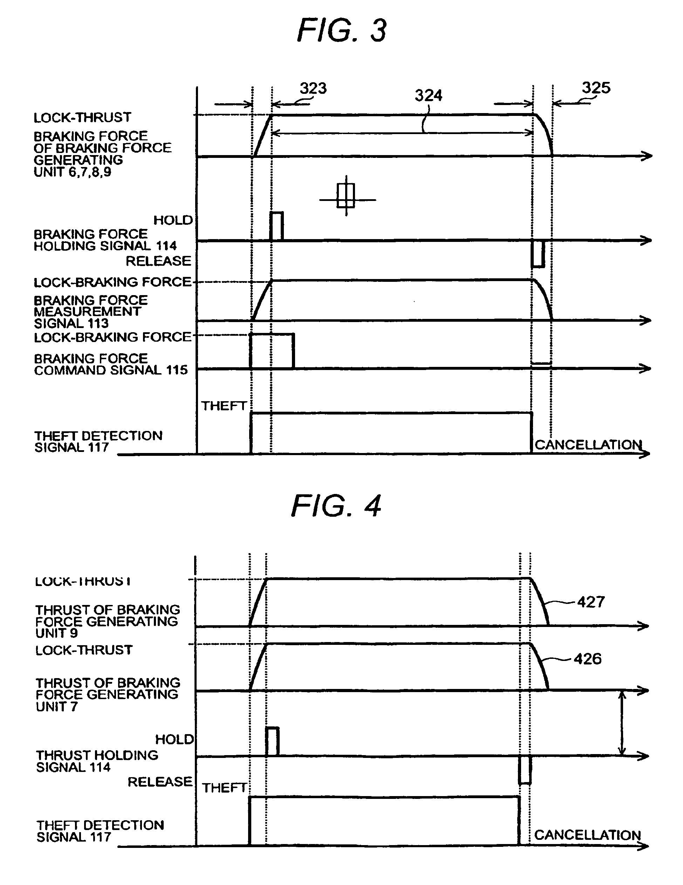

FIG. 3 shows the operation of these devices when the theft occurs.

When the vehicle theft occurs, theft detection unit 10 is started. This theft detection unit outputs theft detection signal 117 to braking force control device 11 through theft detection signal transmission part 17. This signal can be a braki ng force command value set beforehand when the theft is detected, or a signal which detects just the presence of theft. Further, it is necessary to provide the braking force with a value sufficient to make the wheel locked. With regard to the output of the theft existence signal, the predetermined value of braking force like the above-mentioned is set beforehand in braking force control device 11, which is generated when the theft occurs.

When theft detection signal 117 is input to braking force control device 11, braking force control device 11 make braking force generating units 6, 7, 8, and 9 generate the braking force for making the wheel locked through braking force transmission parts 14, 15, 16, and 22. As a result, wheels 2, 3, 4, and 5 are locked for the vehicle not to move, and the theft is prevented. In a word, braking force command signal 115 shown in FIG. 2 is output when theft detection signal 117 from theft detection signal transmission part 17 shifts to a "Theft" side as shown in FIG. 3. As a result, braking force of the braking force generating unit is increased up to lock braking force (323).

When the braking force which reached the lock braking force is detected with braking force measurement signal 113, braking force holding signal 114 indicative of the hold of the braking force is output, and braking force of braking force generating unit 6, 7, 8 and 9 is held to lock braking force. Even if braking force command signal 115 is decreased to zero in such a state, the braking force of each wheel is held (324).

Moreover, when theft detection signal 117 is released so that the theft can be released, braking force holding signal 114 indicative of the release of braking force release is output. As a result, braking force command signal 115 becomes 0, and the braking force of braking force generating units 6, 7, 8 and 9 become 0 to be released (325).

A usual brake has the structure which a rotor or a drum is pressed by pads or liners. When the braking force is held once in the structure of these brakes, the pad or the liner forms the solid body structure with the rotor or the drum. It is structurally impossible to detach the knuckle arm or the drum so as to release the braking force. Moreover, even if braking force transmission parts 14, 15, 16 and 22 are disconnected, the braking force which has generated by braking force generating unit 6, 7, 8 and 9 is not released, because an anti -theft system is independent of braking force control device 11 when braking force is mechanically held.

Moreover, because the brake force is mechanically held, it is not necessary to receive the supply of energy such as an electric power, a negative pressure, and an oil pressure from the outside, and there is no case that the braking force does not come off due to the energy loss during the anti-theft operation.

Moreover, when the theft is detected, theft detection unit 10 outputs theft detection signal 117 to engine control unit 20 through theft detection signal transmission part 18, and puts power train 21 of an engine or a hybrid system of an engine and a motor into the state where they can not be started up.

The braking force is released from the lock braking force as understood from change 325 of the thrust by braking force generating unit 6 as shown in FIG. 3, and the braking force shifts to the usual state or the state without braking force. If the driver etc. do the release operation for anti-theft with the regular key, the vehicle theft detection is released, and it becomes possible to run normally.

Locking all wheels by the above-mentioned mechanism has a very high effect in a tow-theft or a self-running theft, which increases rapidly in recent years.

Further, it is also possible to lock only the predetermined wheel as shown in FIG. 4. That is, the self-running theft or the tow-theft can be prevented also by locking two wheels or more (wheels 3 and 4 or wheels 5 and 2) in the diagonal corner without locking all wheels, and a similar effect can be expected.

In FIG. 4, theft detection unit 10 is started when the vehicle theft is detected based on a signal from signals from various sensors input to theft detection unit 10 and signals from other control devices, and theft detection signal 117 is output to braking force control device 11 through theft detection signal transmission part 17. This signal may be a braking force instruction value set beforehand when the theft is detected or a signal which detects the presence of the theft. It is necessary to set a predetermined value of the braking force generated when the theft occurs in braking force control device 11 when the theft signal is output.

When theft detection signal 117 is input, braking force control device 11 causes braking force generating units 7 and 9 (or, 6 and 8) to generate the braking force which makes the wheel locked through braking force transmission parts 14 and 16. Wheels 3 and 4 (or, 2 and 5) are locked and the movement of the vehicle is inhibited to prevent the theft.

When all wheels have been locked by the occurrence of the theft as indicated by 426 and 427 of FIG. 4, the braking force is mechanically held in the braking force generation means. When a certain predetermined time passes, the theft detection means stops operation. Therefore, the power consumption is reduced.

### [Embodiment 2]

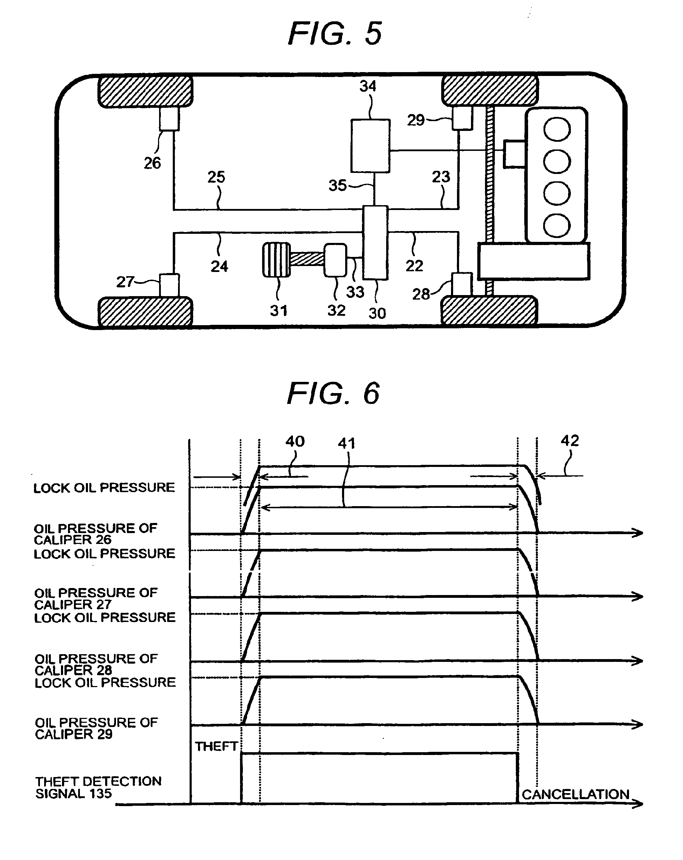

FIG. 5 shows a concrete embodiment with an electric hydraulic brake system. Reference numerals 26, 27, 28 and 29 designate the oil pressure caliper built in the mechanical brake force holding mechanism. Numerals 22, 23, 24 and 25 designate the oil pressure piping, which output the oil pressure corresponding to the manipulated variable of the pedal from oil pressure control unit 30 according to a signal output from the pedal unit 32 which converts the manipulated variable of brake pedal 31 into an electric signal through electric wire 33. That is, the oil pressure control unit can control independently the oil pressure calipers of all the wheels by inputting the braking force signals. In a word, the braking force of each wheel can be controlled.

The system operation when the theft is detected is explained by using FIG. 6.

Theft detection unit 34 outputs theft detection signal 135 to oil pressure control unit 30 through electric wire 35 when theft detection unit 34 detects the theft now. Just when theft detection signal 135 is input, the oil pressure control unit raises the oil pressure of all wheels to the regulated oil pressure by which all the wheels are put into the lock state as indicated by 40 of FIG. 6. After the regulated oil pressure is set, the caliper pressure is shifted to the oil pressure holding mode as indicated by 41 to reduce the power consumption of the system. If theft detection signal 135 is released, the lock oil pressure is released as indicated by numeral 42.

### [Embodiment 3]

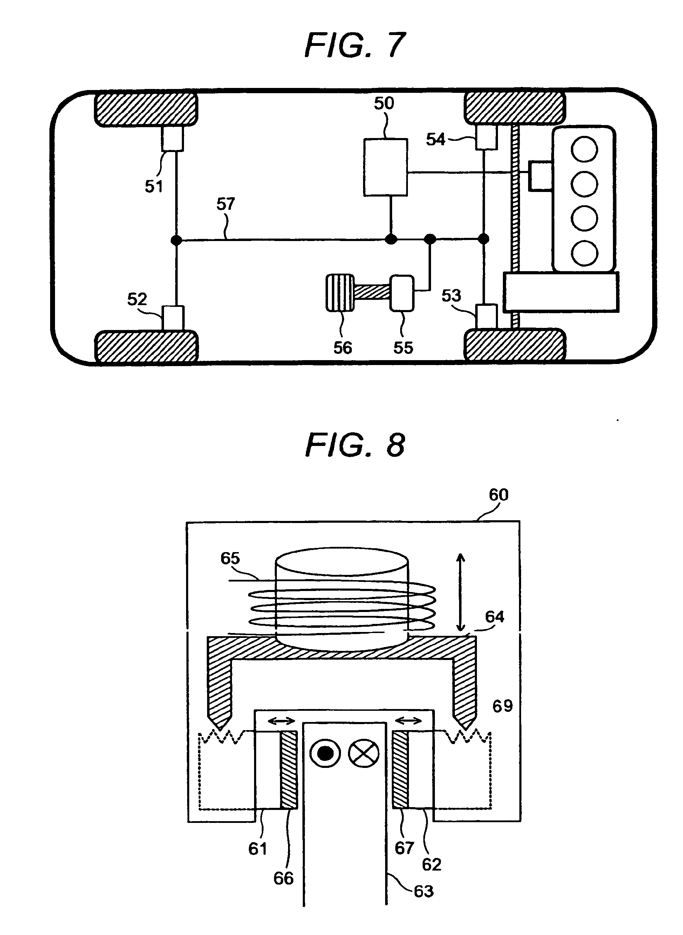

FIG. 7 shows an embodiment of the present invention with a dynamo-electric brake. Reference numerals 51, 52, 53 and 54 each designates an electric caliper, which can generate the braking force by an electric signal.

The manipulated variable of brake pedal 56 operated by the driver is detected with the manipulated variable detection device 55 of the brake pedal, converted into the electric signal, and is output to electric calipers 51, 52, 53 and 54 through electric wire 57. Electric calipers 51, 52, 53 and 54 generate the braking force by inputting the driver's brake manipulated variable signal and brake the vehicle.

One embodiment of the electric caliper is shown in FIG. 8. This figure shows the braking force holding unit included in braking force generating unit 100 shown in FIG. 2, the remaining configuration is the same as that of FIG. 2. Piston 61 and 62 which make the braking force generate by pressing rotor 63 from both sides by friction members 66 and 67 are built in electric caliper 60. In the usual operation, the brake force is controlled by moving pistons 61 and 62 right and left in FIG. 8 by an electric signal to press rotor 63 with friction members 66 and 67 or detach them from rotor 63.

Based on the command provided when the vehicle parks or the theft occurs, the lock braking force is generated by pistons 61 and 62 and solenoid 65 is made to be turned on. Therefore, plunger 64 of the braking force holding unit is moved downwards in FIG. 8, and engaged with grooves 69 of pistons 61 and 62. As a result, the state that friction members 66 and 67 have pressed rotor 63 from both sides is held because the position in the horizontal direction of the piston is fixed, that is, the braking force is held mechanically.

In unlocking, braking force holding unit 64 is moved upwards in FIG. 8 to disengage. As a result, the braking force is released and the movement in the horizontal direction of piston 61 and 62 becomes possible.

The device disclosed in Japanese Patent Application Laid-Open No. 2003-222172 may be applied with regard to the structure of an electric parking brake which generates or releases such braking force. However, this embodiment cannot be realized only by using the conventional electric parking brake which holds the braking force at parking without external energy. In a word, there is a feature in that the lock braking forces for four wheels or two wheels in the diagonal corner are generated independently with dynamo-electric brakes in this embodiment. As a result, the self-running theft or the tow theft becomes difficult by using the device according to this embodiment.

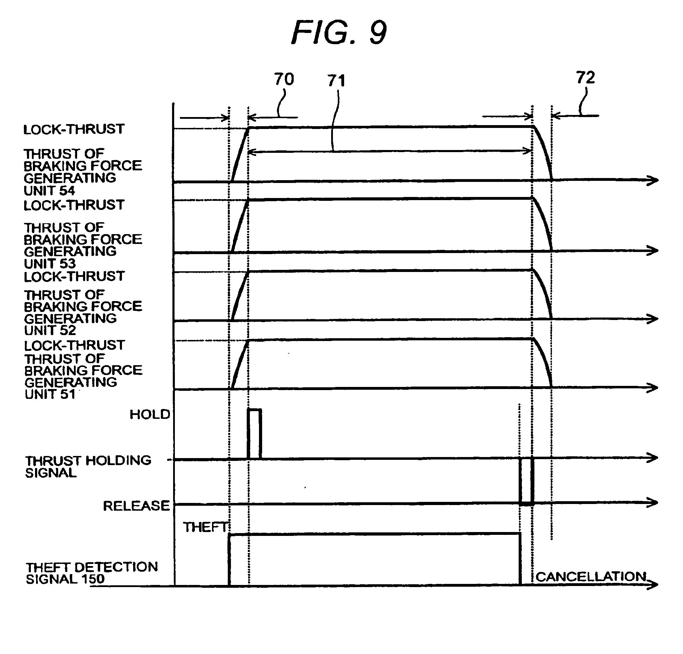

The operation of the system when the theft is detected is explained by using FIG. 9.

When theft detection unit 50 detects the theft of a vehicle, theft detection signal 150 is output to electric caliper 51, 52, 53 and 54 through electric wire 57. This signal can be a braking force command value which had been set beforehand when the theft is detected, or a signal which detects just the presence of theft. With regard to the output of a signal indicative of the presence of theft, it is necessary to pre-set the predetermined value of braking force which should be generated when the theft occurs in electric caliper 51, 52, 53 and 54.

Then, the braking force (thrust) sufficient to make each wheel locked begins to be generated at the stage 70 in FIG. 9. The braking force holding signal is generated in the caliper when the calipers of all wheels have the lock braking force by theft detection signal 150, and the lock braking force is held at the stage 71. Theft detection signal 150 is released when the door is unlocked by the regular key, and the braking force holding signal indicative of the release is generated to release the lock braking force. As a result, it becomes possible for the vehicle to run normally.

### [Embodiment 4]

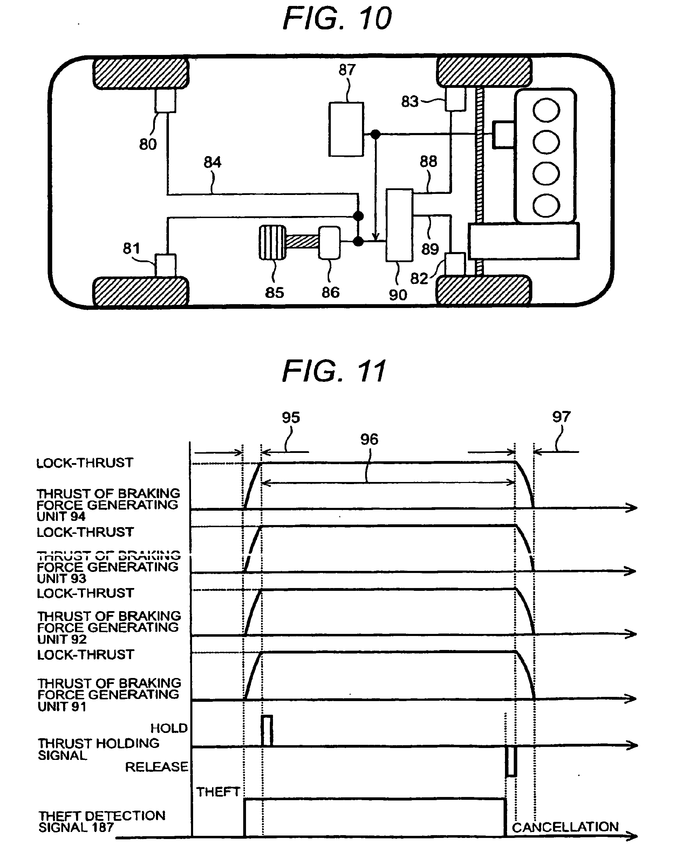

The embodiment in which the present invention is applied for the brake system of an electric oil pressure type or an electric hybrid type as shown in FIG. 10 is described.

FIG. 10 shows a system in which the oil pressure calipers are used for two front wheels and the electric calipers for two rear wheels. In FIG. 10, Reference numerals 80 and 81 designates the electric calipers, and 82 and 83 the oil pressure calipers.

The manipulated variable of brake pedal 85 operated by the driver is detected with the manipulated variable detection device 86 of the brake pedal, converted into the electric signal, and is output to electric calipers 80 and 81, and oil pressure control unit 90 through electric wire 84. When a signal from electric wire 84 is received, electric calipers 80 and 81 control the braking force, and the oil pressure control unit controls the oil pressure of the oil pressure calipers 82 and 83 to control the braking effort of the vehicle.

The operation of the system when the theft is detected is explained by using FIG. 11.

When theft detection unit 87 detects the theft of a vehicle, theft detection signal 187 is output to electric calipers 80 and 81, and oil pressure control unit 90 through electric wire 84. This signal can be a braking force command value which had been set beforehand when the theft is detected, or a signal which detects just the presence of theft. With regard to the output of a signal indicative of the presence of theft, it is necessary to pre-set the predetermined value of braking force which should be generated when the theft occurs in electric calipers 80 and 81, and oil pressure control unit 90.

Then, the braking force (thrust) sufficient to make each wheel locked begins to be generated at the stage 95. The braking force holding signal is generated in the caliper when the calipers of all wheels reach the lock braking force by theft detection signal 187, and lock braking force is held at the stage 96. The braking force holding signal indicative of the release is generated when a door is unlocked by the regular key, and theft detection signal 187 is released. The lock braking force for each wheel is released, and the vehicle comes to be able usually to run.

It is possible to lock one wheel or more in the same manner as said embodiment though the example of locking all wheels was given.

The present invention is not limited to embodiments 1 to 4 though they are described from the viewpoint of anti-theft.
Details of the structure of the embodiments 1 to 4 may be combined in order to form further embodiments optimized for the respective application. As far as such modifications are readily apparent for an expert skilled in the art, they shall be disclosed implicitly by the disclosure of embodiments 1 to 4. For example, it is possible to apply also to the braking control performed at the stop or the parking of the vehicle, or the braking control performed by detecting the environments of the vehicle other than the theft. Further, although the plunger is engaged with the grooves of the pistons when the theft is detected in the above embodiments, it should be appreciated that the feature of the present invention resides in the brake mechanics locked mechanically.

In other words, although the present invention has been illustrated and described with respect to exemplary embodiment thereof, it should be understood by those skilled in the art that the foregoing and various other changes, omission and additions may be made therein and thereto, without departing from the and scope of the present invention. Therefore, the present invention should not be understood as limited to the specific embodiment set out above but to include all possible embodiments which can be embodied within the scope of the appended claims.

## Claims

1. A brake operating unit for anti-theft, wherein
theft information is generated by detecting the theft based on a signal (117) from a sensor or a control device for a vehicle, **characterized in that**
a braking force is generated by using the frictional force between a rotor (103) and a piston (101, 102) which compose a brake of said vehicle when said detected theft information is generated, and
a brake holding member is caused to engage with said piston (101, 102), and the braking force is mechanically held.

2. Brake operating unit for anti-theft according to claim 1, wherein said brake operating unit for anti-theft holds said braking force for the predetermined period by generating the predetermined braking force based on said theft information.

3. Brake operating unit for anti-theft according to claim 1 or 2, wherein said theft information is generated based on the information or the order of the detection of the vibration of the inclination of the vehicle, the opening of the door, the bonnet and the trunk, and the engine starting in a locked state.

4. Brake operating unit for anti-theft according to claim 1, 2 or 3, wherein the braking force is generated to lock the predetermined wheel (2, 3, 4, 5) based on said theft information.

5. Brake operating unit for anti-theft according to any of claims 1 to 4, wherein
said braking force is generated based on the generation of said theft information, and said brake holding force is held unless a signal for releasing said braking force is input.

## Patentansprüche

1. Bremsenbetätigungseinheit zur Diebstahlsicherung, wobei Diebstahlsinformation durch Erfassen des Diebstahls auf der Basis eines Signals (117) von einem Sensor oder einer Steuerungsvorrichtung für ein Fahrzeug erzeugt wird, **dadurch gekennzeichnet, dass**
eine Bremskraft unter Verwendung der Reibungskraft zwischen einem Rotor (103) und einem Kolben (101, 102), die eine Bremse des Fahrzeugs bilden, erzeugt wird, wenn die erfasste Diebstahlsinformation erzeugt wird, und
ein Bremsenhalteelement veranlasst wird, mit dem Kolben (101, 102) in Eingriff zu treten, und die Bremskraft mechanisch gehalten wird.

2. Bremsenbetätigungseinheit zur Diebstahlsicherung nach Anspruch 1, wobei die Bremsenbetätigungseinheit zur Diebstahlsicherung die Bremskraft die vorbestimmte Zeitdauer lang hält, indem sie die vorgegebene Bremskraft auf der Basis der Diebstahlsinformation erzeugt.

3. Bremsenbetätigungseinheit zur Diebstahlsicherung nach Anspruch 1 oder 2, wobei die Diebstahlsinformation auf der Basis der Information oder der Reihenfolge der Erfassung der Vibration der Neigung des Fahrzeugs, des Öffnens der Tür, der Motorhaube und des Kofferraums und des Anlassens des Motors in gesperrtem Zustand erzeugt wird.

4. Bremsenbetätigungseinheit zur Diebstahlsicherung nach Anspruch 1, 2 oder 3, wobei die Bremskraft erzeugt wird, um das vorgegebene Rad (2, 3, 4, 5) auf der Basis der Diebstahlsinformation zu sperren.

5. Bremsenbetätigungseinheit zur Diebstahlsicherung nach irgendeinem der Ansprüche 1 bis 4, wobei
die Bremskraft auf der Basis der Erzeugung der Diebstahlsinformation erzeugt und die Bremsenhaltekraft gehalten wird, wenn nicht ein Signal zum Lösen der Bremskraft eingegeben wird.

## Revendications

1. Unité de manoeuvre de frein antivol dans laquelle
une information de vol est générée par détection du vol sur la base d'un signal (117) d'un capteur ou d'un dispositif de commande pour un véhicule, **caractérisée en ce qu'**
un effort de freinage est généré par exploitation de la force de frottement entre un rotor (103) et un piston (101, 102) formant un frein dudit véhicule quand ladite information de vol est générée, et
un élément de maintien de frein est entraîné en prise avec ledit piston (101, 102), l'effort de freinage étant mécaniquement maintenu.

2. Unité de manoeuvre de frein antivol selon la revendication 1, dans laquelle ladite unité de manoeuvre de frein antivol maintient ledit effort de freinage pendant la période prédéfinie en générant l'effort de freinage prédéfini sur la base de ladite information de vol.

3. Unité de manoeuvre de frein antivol selon la revendication 1 ou 2, dans laquelle ladite information de vol est générée sur la base de l'information ou de la commande de détection de la vibration ou de l'inclinaison du véhicule, de l'ouverture de porte, du capot ou du coffre, et du démarrage du moteur en état de verrouillage.

4. Unité de manoeuvre de frein antivol selon la revendication 1, 2 ou 3, dans laquelle l'effort de freinage est généré pour bloquer la roue prédéfinie (2, 3, 4, 5) sur la base de ladite information de vol.

5. Unité de manoeuvre de frein antivol selon l'une des revendications 1 à 4, dans laquelle ledit effort de freinage est généré sur la base de la génération de ladite information de vol, et où ledit effort de freinage est maintenu jusqu'à l'émission d'un signal d'annulation dudit effort de freinage.
